# EUROPEAN PATENT APPLICATION

(11) **EP 4 582 396 A1**
(43) Date of publication of application: **09.07.2025**
(21) Application number: 24223341.9
(22) Date of filing: 27.12.2024
(51) Int. Cl.: C03C 17/44

(54) **METHOD FOR DECORATING A GLASS CONTAINER WITH LUSTER**

(30) Priority: 27.12.2023 BE 202306067
(71) Applicant: Baobab Collection SA, 1300 Wavre (BE)
(72) Inventor: LAHY, Alain, 1300 Wavre (BE); AUGUSTO, Arnaud, 1300 Wavre (BE); DELEVAL, Eléonore, 1300 Wavre (BE); GARDIES, Jonathan, 1300 Wavre (BE)
(74) Representative: Brantsandpatents bv

(57) **Abstract**

The current invention relates to a method for decorating a glass container with luster, comprising the steps of: (i) applying a luster composition, comprising a luster and a luster thinner onto a glass container,(ii) transferring said glass container to an oven, wherein said glass container is subjected to a thermal treatment, and (iii) removing said glass container from said oven.

## Description

### FIELD OF THE INVENTION

The present invention relates to a method for decorating glass containers with luster and decorated glass containers.

### BACKGROUND

The decoration of glass containers, particularly jars and candles, with luster finishes is a long-established practice in the field of glass art and industrial decoration. While the aesthetic appeal of luster-finished jars is widely recognized, conventional methods of applying these finishes present several challenges and limitations.

One of the primary issues with existing luster decoration methods is the lack of consistency in the final appearance. Traditional luster applications often rely on generic paint compositions and application techniques that do not adequately account for the unique properties of different glass surfaces. This can lead to variations in finish quality, with some jars exhibiting uneven luster, color inconsistencies, or less-than-desirable levels of sheen and brilliance. Such variations can diminish the perceived value and appeal of the finished products, especially in markets where high-quality and uniform aesthetics are critical.

Furthermore, the durability of luster finishes applied using conventional methods is often suboptimal. The finishes may be prone to chipping, fading, or wear over time, particularly when the jars are subjected to regular handling or cleaning processes. This lack of durability not only affects the long-term aesthetic appeal but also raises concerns about the practicality and economic viability of these methods, especially for commercial production.

JPH08183682, US2984575, CN1070461, EP0849235, GB1002293 disclose decoration methods.

Additionally, the existing processes for luster application and curing are typically energy-intensive and time-consuming. They often require extended periods of heating and cooling, which can lead to significant energy consumption and inefficiencies in production throughput. This not only increases the environmental footprint of the process but also adds to the overall costs of production, making it less attractive for large-scale industrial applications.

The invention described herein seeks to address these challenges by introducing an improved method for decorating glass containers with luster. This method aims to achieve a more consistent and durable luster finish, reduce energy consumption, and streamline the production process, thereby overcoming the limitations of current practices in the field.

### SUMMARY OF THE INVENTION

The invention pertains to a method for decorating glass containers with luster according to claim 1. The method involves applying a luster composition onto a glass container and subjecting it to a precise thermal treatment in an oven. The thermal treatment comprises a series of heating and cooling stages, with specific temperature increase rates and durations.

A preferred embodiment is provided in claim 7. Herein the oven includes ventilation hatches which are opened or closed depending on the temperature inside the oven. The method ensures efficient residue elimination, reduces potential thermal damage to the glass container.

The method provides several advantages including improved consistency and durability of the luster finish, reduced energy consumption, increased production efficiency, and enhanced aesthetic appeal of the finished products.

The thermal treatment contributes to the durability of the luster finish. By allowing sufficient time for the luster to adhere and settle on the glass surface, the finish is less likely to chip, fade, or wear over time. This not only improves the long-term aesthetic appeal of the glass containers but also enhances their practicality and economic viability, particularly for commercial production.

This method of decorating glass containers with luster not only delivers a high-quality and uniform aesthetic appeal but also reduces energy consumption and streamlines the production process. It overcomes the limitations of conventional luster application methods and presents a more practical and economically viable solution for both artistic and industrial applications.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
The term "glass container" refers to any vessel or receptacle made predominantly of glass, intended for holding various substances. This includes jars, bottles, flasks, etc., and can vary in size, shape, and capacity. The material properties of glass, such as transparency, chemical inertness, and aesthetic appeal, make it suitable for a wide range of applications. In a preferred embodiment, the glass container is a candle container.

The term "oven" in this context is a thermal processing unit used for heating, baking, or drying substances or objects. It is capable of reaching and maintaining various set temperatures, and is essential for processes like baking, curing, or other heat treatments.

The expression "thermal treatment" refers to a process involving controlled heating and cooling cycles, used to alter the properties or appearance of materials, particularly for fixing luster onto glass containers.

The expression "temperature increase rate" refers to the speed at which temperature is raised within the oven, typically measured in degrees Celsius per hour (°C/h).

The expression "end temperature" refers to the final (highest) target temperature achieved in the thermal treatment process, after which the heating is stopped or maintained for a specified period.

The expression "ventilation hatches" refers to adjustable openings or vents in the oven, designed to control the internal atmosphere, particularly for the release or retention of gases or heat.

The expression "engraving" refers to the process of incising or carving a design onto the surface of an object, such as a glass container, for decorative purposes.

The expression "ambient temperature" refers to the temperature of the surrounding environment where the process is taking place, typically room temperature.

The expression "transferring" refers to the act of moving something from one place to another, here, the process of moving the decorated glass containers into an oven for thermal treatment.

The expression "heating" refers to the process of raising the temperature of an object or substance, in this context, part of the thermal treatment process in the oven.

The expression "cooling" refers to the process of lowering the temperature of an object or substance, in this case, part of the thermal treatment process to finalize the luster application.

The expression "luster" refers to a type of finish or coating applied to glass surfaces, characterized by its metallic sheen or glossy appearance. This can include finishes made from gold, silver, copper, platinum, or other materials that provide a reflective and decorative surface quality.

The expression "solvent" is synonym to "luster thinner" and refers to a substance, typically a liquid, used to dissolve other materials. In the context of luster application, solvents are used to thin luster paints to the desired consistency for application.

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a preferred embodiment of the invention, a method for decorating a glass container with luster is disclosed. This method involves the application of a luster composition onto the glass container. The luster composition comprises a luster and a luster thinner. The luster provides the desired aesthetic finish, while the thinner ensures the appropriate consistency for application. The luster composition is applied onto the glass container, which can be of any shape or size, and is suitable for a variety of applications, including but not limited to jars, bottles, and decorative items.

Following the application of the luster composition, the glass container is transferred to an oven for thermal treatment. The thermal treatment is an advantageous part of the process as it influences the final appearance and durability of the luster finish. The thermal treatment comprises several steps, each with specific temperature increase rates and target temperatures.

The invention thus pertains to a method for decorating a glass container with luster. In a preferred embodiment, the method comprises the steps of:
i. applying a luster composition, comprising a luster and a luster thinner, onto a glass container,
ii. transferring said glass container to an oven, wherein said glass container is subjected to a thermal treatment, and
iii. removing said glass container from the oven.

It is to be understood the steps as disclosed herein are performed sequentially.

In the first step, the glass container is heated at a temperature increase rate of between 70 and 90°C/h until a temperature of between 150 and 170°C is reached. More preferably, the temperature increase rate is about 80°C/h and the target temperature is about 160°C. This initial phase of heating helps to ensure the proper adhesion of the luster composition to the glass surface.

In one embodiment, the temperature increase rate is between 50 and 150°C/h, preferably between 70 and 90°C/h, more preferably between 75 and 85°C/h.

The first stage (step a.) involves heating at a temperature increase rate of between 70 and 90°C/h. In a preferred embodiment of the invention, the method involves a thermal treatment process in which step (a) is characterized by reaching a temperature between 150 and 170°C. In this preferred embodiment, the temperature in step (a) is gradually increased at a speed of between 70 and 90°C/h until a temperature between 150 and 170°C is reached. It is during this temperature range that the luster begins to adhere to the glass containers. It is important to note that the temperature range of 150-170°C is not a strict limit but rather an optimal range that has been found to yield the best results in terms of luster adherence. In other embodiments, the temperature in step (a) may be slightly lower or higher than this range, depending on the specific type of luster and glass container being used. However, it is generally preferred to stay within this range to ensure the best results.

In a more preferred embodiment, the temperature reached in step (a) is between 155 and 165°C. This narrower temperature range provides an even better balance between the need for effective luster adherence and the need to prevent any potential damage to the glass containers due to excessive heat. In the most preferred embodiment, the temperature reached in step (a) is about 160°C. This specific temperature has been found to provide the optimal conditions for luster adherence, resulting in decorations that are not only visually appealing but also highly durable and resistant to environmental stresses.

In a further embodiment, the thermal treatment can be adjusted depending on the specific requirements of the luster and engraved designs. For example, the temperature increase speeds and end temperatures can be varied within a certain range to achieve the desired results. More preferably, the temperature increase speed in the first step (a) can be between 60°C/h and 100°C/h, more preferably between 70°C/h and 90°C/h, and most preferably around 80°C/h. The end temperature in the first step can be between 140°C and 180°C, more preferably between 150°C and 170°C, and most preferably around 160°C.

In the second step, the temperature increase rate is between 110 and 130°C/h until a temperature of between 390 and 410°C is reached. More preferably, the temperature increase rate is 120°C/h and the target temperature is 400°C. This intermediate phase of heating aids in the curing of the luster composition, contributing to the formation of a durable and resilient finish.

In one embodiment, the temperature increase rate is between 50 and 150°C/h, preferably between 110 and 130°C/h, more preferably between 115 and 125°C/h.

The second stage (step b.) of the thermal treatment involves heating at a temperature increase rate of between 110 and 130°C/h. In a preferred embodiment of the invention, the method involves a thermal treatment process in which step (b) is characterized by reaching a temperature between 390°C and 410°C. In this preferred embodiment, the temperature in step (b) is gradually increased at a speed of between 110 and 130°C/h until a temperature between 390°C and 410°C is reached.

In a further embodiment, the temperature increase speed in the first step (b) can be between 100°C/h and 140°C/h, more preferably between 110°C/h and 130°C/h, more preferably between 115 and 125°C/h, and most preferably around 120°C/h. The temperature reached in the second step (b) can be between 380°C and 420°C, more preferably between 390°C and 410°C, and most preferably around 400°C.

In a more preferred embodiment, the temperature reached in step (b) is between 395 and 405°C. This narrower temperature range provides an even better balance between the need for effective luster adherence and the need to prevent any potential damage to the glass containers due to excessive heat. In the most preferred embodiment, the temperature reached in step (b) is about 400°C.

In the third step, the temperature increase rate is between 190 and 210°C/h, until an end temperature between 570 and 590°C is reached. More preferably, the temperature increase rate is about 200°C/h and the end temperature is about 580°C. This final phase of heating further enhances the curing process, ensuring the development of a high-quality luster finish with optimal sheen and brilliance.

In one embodiment, the temperature increase rate is between 150 and 250°C/h, preferably between 190 and 210°C/h, more preferably between 195 and 205°C/h.

Subsequently, the glass container is heated for 10-30 minutes at the end temperature. More preferably, the heating duration is about 20 minutes. This step allows for the complete curing of the luster composition, resulting in a finish that is not only visually appealing but also resistant to wear and tear.

Finally, the glass container is cooled by decreasing the temperature in the oven, thereby obtaining a decorated glass container. The cooling process is gradual and controlled to prevent thermal shock, which could potentially damage the luster finish or the glass container. After cooling, the glass container is removed from the oven.

It is to be understood the steps as disclosed herein are performed sequentially.

The precision in the thermal treatment of the luster composition leads to a more consistent and uniform luster finish on the glass container. This potentially reduces the number of rejects and increases overall product quality, thereby providing significant advantages over conventional luster decoration methods.

In a preferred embodiment of the present invention, the luster thinner utilized in the method of decorating glass containers with luster is selected from a group comprising: turpentine, mineral spirits, white spirit, acetone, ethanol, water, or a combination thereof. Preferably turpentine is used.

The use of these specific luster thinners in the method of the present invention offers several distinct advantages. Firstly, these substances are widely available and relatively inexpensive, which contributes to the overall cost-effectiveness of the method. Secondly, these substances are known to be effective in thinning luster, thereby facilitating its application to the glass containers and improving the consistency and uniformity of the resulting finish.

In the most preferred embodiment of the present invention, the luster thinner is turpentine. Turpentine is a particularly effective luster thinner and is known to provide a high-quality and durable finish. Furthermore, turpentine has a relatively low toxicity profile compared to some other luster thinners, which can make the method of the present invention more environmentally friendly and safer to use. Specifically, the use of turpentine as a luster thinner contributes to achieving a more uniform, consistent finish on the decorated glass containers. This is a significant improvement over traditional methods that often result in uneven luster and color inconsistencies.

The turpentine, when mixed with the luster, helps to adjust the viscosity of the luster, making it more amenable to application on the glass containers. This adjustment in viscosity facilitates a smoother, more even spread of the luster on the glass surface, thereby contributing to a more uniform and consistent finish. The turpentine also aids in the adherence of the luster to the glass surface, further enhancing the quality of the finish.

In addition to enhancing the application process and the final luster finish, the use of turpentine as a luster thinner also offers other benefits. For instance, turpentine is known for its fast evaporation rate, which can help to expedite the drying time of the luster on the glass containers. This can lead to increased efficiency in the production process, resulting in time and cost savings. Furthermore, turpentine is a natural product derived from pine trees, making it a more environmentally friendly option compared to synthetic thinners.

In all of the above embodiments, the luster thinner can be used in various proportions depending on the specific requirements of the method. In a preferred embodiment, the luster thinner is used in a proportion of between 10 and 90% by weight. of the luster composition, more preferably between 20 and 80% by weight, and most preferably between 30 and 75% by weight. This range of proportions allows for the optimal thinning of the luster, ensuring that it can be easily applied to the glass containers while still providing a high-quality and durable finish. However, it has been found that using luster thinner in the aforementioned weight percentages yields the most desirable results in terms of uniformity and consistency of the luster finish.

In a preferred embodiment of the invention, the luster composition that is applied to the glass containers comprises a specific amount of luster and a luster thinner. The luster is preferably present in the composition in an amount of between 10 and 90% by weight, preferably between 20 and 80% by weight, and even more preferably between 25 and 70% by weight.

In a preferred embodiment of the present invention, the method further includes the step of engraving the glass containers prior to the application of the thermal treatment. This additional process affords the opportunity to enhance the aesthetic appeal of the decorated glass containers. The engraved designs can provide a unique and customized look to each container, which can be particularly beneficial in industries where product differentiation and brand identity are of high importance.

The engraving process can be performed using any suitable engraving device, and the designs can be drawn using a marker or any other suitable implement.

The engraving is performed before the thermal treatment to ensure that the engraved designs are well-integrated into the glass surface and are not compromised by the high temperatures used in the thermal treatment.

In a preferred embodiment of the invention, the method for decorating glass containers involves the use of an oven with ventilation hatches. The inclusion of ventilation hatches in the oven design is an advantageous feature that contributes to the effectiveness and efficiency of the overall decoration process.

The ventilation hatches play an advantageous role in the thermal treatment phase of the decoration process. In a preferred embodiment, as the oven heats up, these hatches remain open until the oven reaches a temperature of 400°C. This open-hatch state facilitates the elimination of volatiles and residues that may be present from the luster, thus ensuring a clean and uncontaminated environment for the thermal treatment.

This open position allows for the efficient removal of volatiles that may be present in the oven, thereby enhancing safety during the luster application process. It is envisaged that this could include, but is not limited to, volatiles originating from the luster itself, the solvent used in the luster application, or any other source within the oven. This aspect of the method is particularly advantageous as it enhances the overall efficiency of the luster application process and ensures the production of high-quality decorated glass containers.

In this embodiment, once the oven reaches the temperature of 400°C, the ventilation hatches are (automatically) closed. This closed position serves to concentrate the thermal energy within the oven, focusing it on the luster-decorated glass containers. By doing so, it enhances the energy efficiency of the process and contributes to a more uniform application of the luster finish. The closed position of the ventilation hatches also minimizes the loss of heat from the oven, further improving energy efficiency.

In a more preferred embodiment, the transition from the open to the closed position of the ventilation hatches is automatic, triggered by the temperature in the oven reaching 400°C. This automation could be facilitated by a temperature sensor and a control system, which may be in communication with the ventilation hatches. This ensures a precise and timely response to changes in oven temperature, thereby optimizing both safety and efficiency.

It should be noted that while 400°C is the preferred threshold temperature for transitioning the ventilation hatches from the open to the closed position, this temperature could vary depending on specific process requirements or the properties of the luster or glass containers. In some embodiments, the threshold temperature may be slightly lower, for example, between 350°C and 400°C. In other embodiments, the threshold temperature may be slightly higher, for example, between 400°C and 450°C. Regardless of the exact threshold temperature, the fundamental principle of transitioning the ventilation hatches based on a specific temperature threshold remains the same.

In a more preferred embodiment, the transition of the ventilation hatches from open to closed position occurs at a temperature range between 390°C and 410°C, more preferably between 395°C and 405°C, and most preferably at exactly 400°C.

In a preferred embodiment of the invention, the method includes the step of opening ventilation hatches of an oven during the cooling process (step (e)) when the temperature within the oven falls below a specific threshold, preferably 200°C. This particular step in the method significantly contributes to the overall efficiency of the luster application onto glass containers. By allowing the ventilation hatches to open at a defined temperature, the cooling process is expedited, and the overall time necessary for the luster application is considerably reduced. This, in turn, leads to a reduction in the total cost of the luster application process, providing an economical advantage over traditional methods.

The opening of the ventilation hatches at a temperature below 200°C enables a more rapid and controlled cooling of the decorated glass containers. This is significant as the rate and manner of cooling can directly impact the quality and durability of the luster application. By allowing for a quicker cooling process, the proposed method can significantly improve production efficiency. Less time is required for each batch of decorated containers to cool and be ready for the next stage of the process or for final packaging. This can result in a higher throughput of decorated glass containers, which is a notable advantage in high-demand or time-sensitive scenarios.

In the preferred embodiment, the threshold is set at 200°C. However, this threshold is not fixed and can be adjusted according to specific requirements or conditions. For example, in some embodiments, the threshold may be set at a lower temperature, such as 180°C or even 150°C. In other embodiments, a higher temperature threshold, such as 210°C or 220°C, may be used. The choice of threshold temperature depends on various factors, including the type of glass container being decorated, the specific luster being applied, and the particular characteristics of the oven used.

Furthermore, this approach to cooling can also lead to energy savings. By reducing the time that the oven needs to be in operation for each batch, the overall energy consumption of the luster application process can be decreased. This is not only cost-effective but also more environmentally friendly, aligning with the increasing emphasis on sustainability in manufacturing and production practices.

The opening of the ventilation hatches during the cooling process not only accelerates the cooling but also aids in the removal of any residual heat within the oven. This is particularly beneficial in situations where multiple batches of glass containers are being decorated in quick succession, as it allows for faster turnaround times between batches. Furthermore, by reducing the overall time required for the luster application process, the method also contributes to reducing the energy consumption associated with the process, thereby making it more environmentally friendly.

In a preferred embodiment of the invention, the initial stage of the thermal treatment, hereinafter referred to as step (a), has a duration that is specifically set between 1 and 3 hours. This particular duration range has been determined to be optimal for achieving a consistent and high-quality luster finish on the glass containers. The duration of step (a) is not merely a random selection but is a carefully chosen parameter based on extensive experimentation and analysis. The choice of this duration range is integral to the successful implementation of the invention and the realization of its numerous benefits.

In a more preferred embodiment, the duration of step (a) is set between 1.5 and 2.5 hours, preferably between 1.5 and 2 hours. This narrower range provides a further optimized balance between the quality of the luster finish and the efficiency of the production process. It allows for a more precise control of the thermal treatment, reducing the likelihood of over or under-heating and ensuring a more consistent outcome. Most preferably, the duration of step (a) is set at about 1.75 hours. This specific duration has been found to yield the best results in terms of both luster finish quality and production efficiency.

In a preferred embodiment of the invention, the method includes a step (b) which has a duration of between 1 and 3 hours. In a more preferred embodiment of the invention, the duration of step (b) is between 1.5 and 2.5 hours, preferably between 1.75 and 2.25 hours. This narrower range further refines the process parameters, providing an optimal balance between processing time and finish quality. For many lusters and glass containers, a duration within this range is sufficient to achieve a durable and aesthetically pleasing luster finish, without unnecessarily prolonging the production process.

In the most preferred embodiment of the invention, the duration of step (b) is about 2 hours. This specific duration represents the optimum processing time for a wide range of lusters and glass containers, offering the best combination of efficiency and finish quality. By standardizing the duration of step (b) around this value, industrial users can streamline their production process and achieve a consistently high-quality luster finish across different batches of glass containers.

In a preferred embodiment of the invention, the duration of step (c) in the thermal treatment process is within a range of 0.5 to 2 hours. In a more preferred embodiment, the duration of step (c) is between 0.75 and 1.5 hours, preferably between 0.75 and 1.25 hours.

In the most preferred embodiment, the duration of step (c) is about 54 minutes. This duration represents an optimal balance between production efficiency and luster finish quality. It provides sufficient time for the luster to cure properly, ensuring a durable and consistent finish, while also keeping the production process streamlined and efficient.

In a preferred embodiment of the invention, the thermal treatment of the glass containers begins at an ambient temperature, which is preferably between 20 and 25°C, preferably between 20 and 23°C.

The use of ambient temperature as the starting point for the thermal treatment process enhances the efficiency of the method. It eliminates the need for additional energy to preheat the oven, thereby reducing the overall energy consumption of the process. This contributes to the environmental sustainability of the method, aligning it with contemporary standards of eco-friendly operations. Furthermore, by starting at a controlled temperature range, the process can be standardized across different production environments, ensuring consistent quality of the decorated glass containers.

In a specific embodiment of the invention, the method comprises the steps of:
i. applying a luster composition, comprising a luster and a luster thinner onto a glass container,
ii. transferring said glass container to an oven, wherein said glass container is subjected to a thermal treatment, wherein said thermal treatment comprises the steps of:
   a. heating at a temperature increase rate of between 70 and 90°C/h until a temperature of between 150 and 170°C is reached;
   b. heating at a temperature increase rate of between 110 and 130°C/h until a temperature of between 390 and 410°C is reached;
   c. heating at a temperature increase rate of between 190 and 210°C/h, wherein an end temperature is reached, wherein said end temperature lies between 570 and 590°C;
   d. heating for 10-30 minutes at said end temperature;
   e. cooling said glass container by decreasing the temperature in the oven thereby obtaining decorated glass container,
iii. removing said glass container from said oven.

In a specific embodiment of the invention, the method comprises the steps of:
i. applying a luster composition, comprising a luster and a luster thinner onto a glass container,
ii. transferring said glass container to an oven, wherein said glass container is subjected to a thermal treatment, wherein said thermal treatment comprises the steps of:
   a. heating for 1-3 hours at a temperature increase rate of between 70 and 90°C/h;
   b. heating for 1-3 hours at a temperature increase rate of between 110 and 130°C/h;
   c. heating for 0.5-2 hours at a temperature increase rate of between 190 and 210°C/h, wherein an end temperature is reached;
   d. heating for 10-30 minutes at said end temperature;
   e. cooling said glass container by decreasing the temperature in the oven thereby obtaining decorated glass container,
iii. removing said glass container from said oven.

In a preferred embodiment, the invention pertains further to a glass container decorated with luster, which is preferably achieved through a method as described in the previous embodiments. The method ensures a high-quality, appealing decoration on the glass container, primarily due to the controlled heating process that preserves the integrity and design of the luster. This process, therefore, significantly enhances the aesthetic value of the glass container, making it more appealing to consumers and more suitable for various applications.

The method involves a carefully calibrated thermal treatment process, which is designed to ensure optimal adhesion of the luster to the glass container, while also preserving the quality and design of the decals.

The glass container decorated with luster obtained from this method presents a superior solution to the challenges of durability, aesthetic quality, process efficiency, and environmental impact associated with the decoration of glass containers. The method results in a visually appealing product that can withstand various environmental stresses. Furthermore, the method is efficient and environmentally friendly, making it a preferred choice for industries looking to enhance their operational efficiency and sustainability.

### EXAMPLES AND DESCRIPTION OF FIGURES

### Example 1 relates to a method according to an embodiment of the invention.

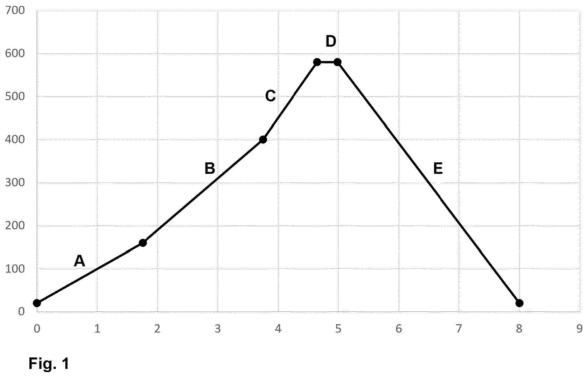

A luster composition is applied to glass candle containers. Afterwards a thermal treatment was carried out, from which the temperature profile (temperature (°C)-time (h)) is given in figure 1.

The thermal treatment is performed in four steps, with each step having a specific temperature increase speed and end temperature. The first step (A) involves a temperature increase speed of 80°C/h to reach a preferred temperature of 160°C. The second step (B) involves a temperature increase speed of 120°C/h to reach a preferred temperature of 400°C. The third step (C) involves a temperature increase speed of 200°C/h to reach a preferred end temperature of 580°C. The fourth and final step (D) involves maintaining the end temperature for 20 minutes. Afterwards the oven is cooled down (E).

The durability of the finish is characterized by its resistance to chipping, fading, and wear, even after extended periods of handling or cleaning. This improvement in the quality of the luster finish enhances the aesthetic appeal of the glass containers, making them more attractive to consumers and more viable for commercial production.

### Example 2 relates to possible luster compositions:

| Luster name/type | Luster (wt.%) | Solvent (wt.%) | Solvent type |
|---|---|---|---|
| Pearl luster | 50 | 50 | Turpentine |
| Pink luster | 30 | 70 | Turpentine |
| Dark brown luster | 25 | 75 | Turpentine |
| Gray luster | 62 | 38 | Turpentine |
| Light blue luster | 55 | 45 | Turpentine |
| Light brown luster | 40 | 60 | Turpentine |

## Claims

1. A method for decorating a glass container with luster, comprising the sequential steps of:
i. applying a luster composition, comprising a luster and a luster thinner onto a glass container,
ii. transferring said glass container to an oven, wherein said glass container is subjected to a thermal treatment, wherein said thermal treatment comprises the sequential steps of:
a. heating at a temperature increase rate of between 70 and 90°C/h until a temperature of between 150 and 170°C is reached;
b. heating at a temperature increase rate of between 110 and 130°C/h until a temperature of between 390 and 410°C is reached;
c. heating at a temperature increase rate of between 190 and 210°C/h, wherein an end temperature is reached, wherein said end temperature lies between 570 and 590°C;
d. heating for 10-30 minutes at said end temperature;
e. cooling said glass container by decreasing the temperature in the oven thereby obtaining decorated glass container,
iii. removing said glass container from said oven.

2. Method according to claim 1, wherein said luster thinner is chosen from: turpentine, mineral spirits, white spirit, acetone, ethanol, water, or a combination thereof.

3. Method according to claim 2, wherein said luster thinner comprises turpentine.

4. Method according to any of the preceding claims, wherein said luster composition comprises said luster in an amount of between 25 and 70% by weight, and said luster thinner in an amount of between 30 and 75% by weight.

5. Method according to any of the preceding claims, wherein said glass container is engraved before applying said thermal treatment.

6. Method according to any of the preceding claims, wherein said oven comprises ventilation hatches.

7. Method according to claim 6, wherein said ventilation hatches are in an open position as long as the temperature in said oven is below 400°C, and wherein said ventilation hatches are in a closed position when the temperature in said oven is above 400°C.

8. Method according to claim 7, wherein said ventilation hatches are opened during cooling, when the temperature in said oven is below 200°C.

9. Method according to any of the preceding claims, wherein step (a) has a duration of between 1 and 3 hours.

10. Method according to any of the preceding claims, wherein step (b) has a duration of between 1 and 3 hours.

11. Method according to any of the preceding claims, wherein step (c) has a duration of between 0.5 and 2 hours.

12. Method according to any of the preceding claims, wherein the temperature at the beginning of said thermal treatment is ambient temperature, preferably between 20 and 25°C.
